(19) **Europäisches Patentamt / European Patent Office / Office européen des brevets**

(11) **EP 3 496 262 A1**

(12) **EUROPEAN PATENT APPLICATION**

(43) Date of publication:
**12.06.2019 Bulletin 2019/24**

(21) Application number: **18210065.1**

(22) Date of filing: **04.12.2018**

(51) Int Cl.:
**H02P 5/00** (2016.01)    **H02P 5/68** (2006.01)
**H02P 5/69** (2006.01)    **H02P 7/00** (2016.01)
**H02P 8/00** (2006.01)    **H02P 8/12** (2006.01)
**H02P 8/16** (2006.01)    **B41J 11/00** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2017 JP 2017236310**

(71) Applicant: **KONICA MINOLTA, INC.**
**Tokyo**
**100-7015 (JP)**

(72) Inventors:
• **Ishikawa, Remi**
  **Tokyo, 100-7015 (JP)**
• **Miyajima, Satoshi**
  **Tokyo, 100-7015 (JP)**
• **Oyama, Hiroshi**
  **Tokyo, 100-7015 (JP)**
• **Ueda, Tadayuki**
  **Tokyo, 100-7015 (JP)**

(74) Representative: **Hoffmann Eitle**
**Patent- und Rechtsanwälte PartmbB**
**Arabellastraße 30**
**81925 München (DE)**

(54) **CONVEYING DRIVING DEVICE, CONVEYING DRIVING DEVICE CONTROL METHOD AND PROGRAM, MOTOR DRIVE CURRENT SETTING TABLE GENERATING METHOD AND PROGRAM, IMAGE FORMING APPARATUS, AND IMAGE FORMING APPARATUS CONTROL METHOD AND PROGRAM**

(57)    A conveying driving device of the invention includes a first motor (210) which transmits power to a drive shaft (171a) of a roller (171); a second motor (220) which transmits power to the drive shaft along with the first motor at a torque smaller than that of the first motor; and a controller (110) which sets each of drive current setting values of the first motor and the second motor so that a total value of a consumption current of the first motor and the second motor becomes minimal in a steady state in which the roller rotates at a constant setting speed.

FIG.3

## Description

## CROSS-REFERENCE TO RELATED APPLICATION

Japanese patent application No. 2017-236310 filed on December 8, 2017, including description, claims, drawings, and abstract the entire disclosure is incorporated herein by reference in its entirety.

## Background

### 1. Technological Field

The present invention relates to a conveying driving device, conveying driving device control method and program, motor drive current setting table generating method and program, an image forming apparatus, and image forming apparatus control method and program.

### 2. Description of the Related art

In recent years, a printing speed of an image forming apparatus has been increased. Along with this increase in printing speed, it is required to increase a rotation speed of a conveying roller conveying a sheet and to suppress power consumption of the apparatus.

Relating to this issue, Unexamined Japanese Patent Publication No. 2002-159196 discloses a technique of performing an operation of driving a conveying roller in an acceleration state and a stop state by a stepping motor and performing an operation of driving the same conveying roller in a steady state in which conveying a sheet at a constant speed by a DC brushless motor feedback-controlled on the basis of a rotation speed of the motor. According to this technique, it is possible to ensure positional accuracy in the acceleration state and the stop state and to realize high efficiency and a high-speed rotation accurately controlled in speed in the steady state.

Unexamined Japanese Patent Publication Nos. 2006-039095, 2006-017988, and 2007-058082 disclose a technique of rotating a drive shaft by power of two motors by supplementally transmitting power of the DC brushless motor to the drive shaft driven by the stepping motor. According to this technique, it is possible to accelerate a conveying roller in a short time by reducing a load torque of the stepping motor at the time of activation.

## Summary

However, in the technique disclosed in Unexamined Japanese Patent Publication No. 2002-159196, since the conveying roller is driven only by the DC brushless motor in the steady state, a problem arises in that consumption power cannot be suppressed by the optimization of the consumption current of the stepping motor and the DC brushless motor. In the technique disclosed in Unexamined Japanese Patent Publication Nos.

2006-039095, 2006-017988, and 2007-058082, a problem arises in that the consumption power of two motors is not considered.

The present invention has been made to solve such problems. That is, an object of the invention is to provide a conveying driving device, conveying driving device control method and program, motor drive current setting table generating method and program, an image forming apparatus, and image forming apparatus control method and program capable of suppressing a motor consumption current in the steady state at the time of driving the same drive shaft at different torques by two motors.

To achieve at least one of the abovementioned objects, according to an aspect of the present invention, a conveying driving device reflecting one aspect of the present invention comprises a first motor which transmits power to a drive shaft of a roller, a second motor which transmits power to said drive shaft along with said first motor at a torque smaller than that of said first motor, and a controller which sets each of drive current setting values of said first motor and said second motor so that a total value of a consumption current of said first motor and said second motor becomes minimal in a steady state in which said roller rotates at a constant setting speed.

The objects, features, and characteristics of this invention other than those set forth above will become apparent from the description given herein below with reference to preferred embodiments illustrated in the accompanying drawings.

## Brief Description of the Drawing

The advantages and features provided by one or more embodiments of the invention will become more fully understood from the detailed description given hereinbelow and the appended drawings which are given by way of illustration only, and thus are not intended as a definition of the limits of the present invention.

Fig. 1 is a cross-sectional view illustrating a schematic configuration of an image forming apparatus;
Fig. 2 is a plan view illustrating a schematic configuration of a conveying driving device of a registration roller;
Fig. 3 is a block diagram illustrating a control system of the driving device;
Fig. 4 is a diagram illustrating a motor driver and a drive current measurement circuit which are provided in a stepping motor;
Fig. 5 is a graph showing dependence of a STM drive current, a DCBL drive current, and a total value of a consumption current with respect to a STM set current;
Fig. 6 is a graph showing load condition dependence of a relationship between a STM set current and the total value of the consumption current;

Fig. 7 is a graph showing a relationship between the STM set current and the total value of the consumption current in a steady state calculated on the basis of a predetermined relational expression;

Fig. 8 is a diagram illustrating an example of a table that the STM set current and the DCBL drive current in which the total value of the consumption current in a steady state becomes minimal are registered for each load condition;

Fig. 9 is a diagram illustrating a specific example of a load condition and a registered value in a table that the STM set current and the DCBL drive current in which the total value of the consumption current in the steady state becomes minimal are registered for each load condition;

Fig. 10 is a flowchart illustrating an operation of the image forming apparatus;

Fig. 11 is a diagram illustrating another example of a table that the STM set current and the DCBL drive current in which the total value of the consumption current in the steady state becomes minimal are registered for each load condition;

Fig. 12 is a timing chart showing torques of the stepping motor and a DC brushless motor, the STM set current, and the DCBL drive current in an acceleration state and the steady state along with a conveying speed and a required torque; and

Fig. 13 is a flowchart illustrating the operation of the image forming apparatus.

## Detailed Description of the Embodiments

Hereinafter, one or more embodiments of the present invention will be described with reference to the drawings. However, the scope of the invention is not limited to the disclosed embodiments.

Hereinafter, a conveying driving device, conveying driving device control method and program, motor drive current setting table generating method and program, an image forming apparatus, and image forming apparatus control method and program according to an embodiment of the present invention will be described with reference to the drawings. In the drawings, the same reference numerals will be given to the same components and a repetitive description thereof will be omitted. Further, the dimensional ratios of the drawings are exaggerated for convenience of description and may differ from the actual ratio.

(First Embodiment)

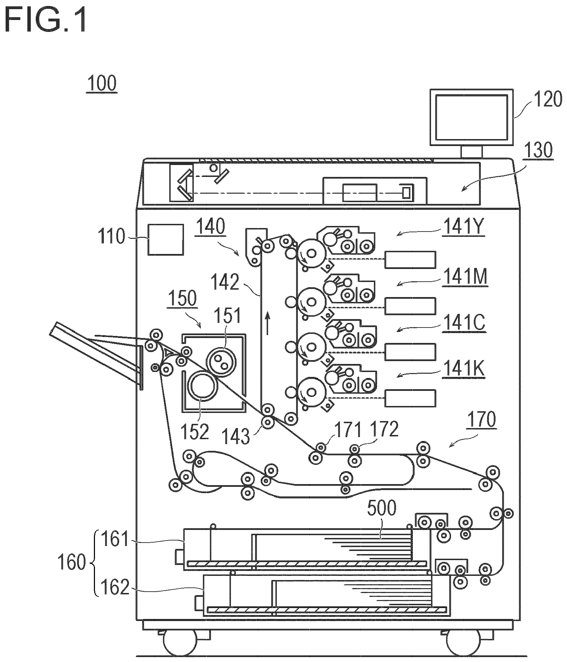

Fig. 1 is a cross-sectional view illustrating a schematic configuration of the image forming apparatus. The image forming apparatus 100 includes a controller 110, an operation panel 120, an image reader 130, an image former 140, a fixer 150, a feeder 160, and a sheet conveyor 170.

The controller 110 includes a Central Processing Unit (CPU) and various memories and performs control for each component or various calculation processes in accordance with a program.

The operation panel 120 includes a touch panel, ten keys, a start button, and a stop button and is used to display various pieces of information and to input various instructions.

The image reader 130 includes a light source such as a fluorescent lamp and an imaging device such as a Charge Coupled Device (CCD) image sensor. The image reader 130 applies light from a light source to a document set at a predetermined reading position, photoelectrically converts the reflected light by the imaging device, and generates image data from the electrical signal thereof.

The image former 140 includes image forming units 141Y to 141K corresponding to respective colors of yellow (Y), magenta (M), cyan (C), and black (K). The toner images which are formed by the charging, exposing, and developing processes of the image forming units 141Y to 141K are sequentially laminated on an intermediate transfer belt 142 and are transferred onto a sheet 500 by a secondary transfer roller 143.

The fixer 150 includes a heating roller 151 and a pressing roller 152 and heats and presses the sheet 500 conveyed to a fixing nip formed between both rollers 151 and 152 to melt and fix the toner image on the surface of the sheet 500.

The feeder 160 includes a plurality of feeding trays 161 and 162 and sends the sheet 500 accommodated in the feeding trays 161 and 162 one by one toward a downstream side in a conveying path.

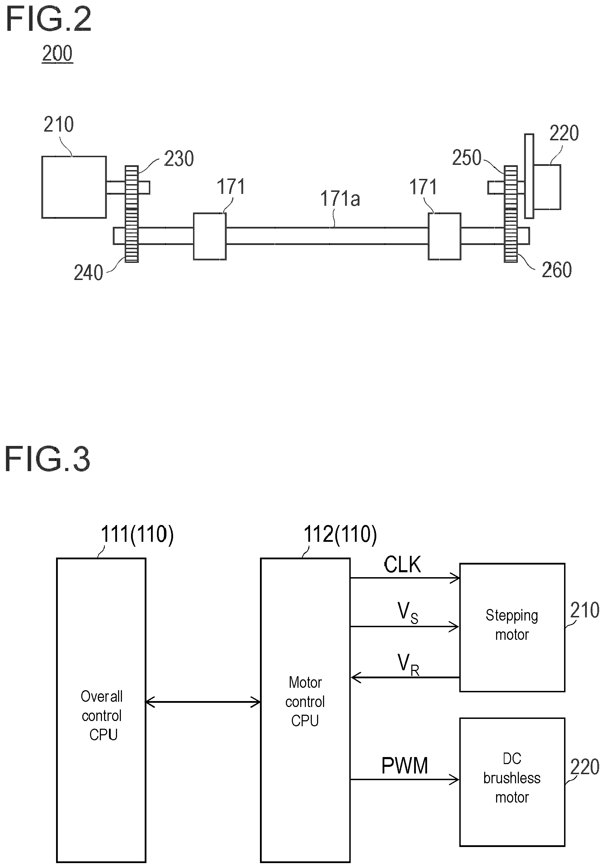

The sheet conveyor 170 includes a plurality of conveying rollers for conveying the sheet 500 and conveys the sheet 500 among the image former 140, the fixer 150, and the feeder 160. The plurality of conveying rollers include a registration roller 171 for correcting a skew of the sheet 500 and a loop roller 172 for forming a predetermined amount of loop in the sheet 500. The registration roller 171 is driven by a conveying driving device 200 (see Fig. 2) including two motors.

Fig. 2 is a plan view illustrating a schematic configuration of the conveying driving device of a registration roller and Fig. 3 is a block diagram illustrating a control system of the driving device.

As illustrated in Fig. 2, the conveying driving device 200 includes a stepping motor 210 and a DC brushless motor 220. The stepping motor 210 and the DC brushless motor 220 respectively constitute a first motor and a second motor.

The stepping motor 210 is connected to a drive shaft 171a of the registration roller 171 through a plurality of gears 230 and 240 so as to be able to transmit power thereto. Further, the DC brushless motor 220 is connected to the drive shaft 171a of the registration roller 171 through a plurality of gears 250 and 260 so as to be able to transmit power thereto. The torque of the stepping motor 210 is set to be larger than the torque of the DC brushless motor 220. Accordingly, the conveying driving device 200 operated in a so-called twin driving manner is obtained such that the power transmitted to the drive shaft 171a by the stepping motor 210 is assisted by the power transmitted to the drive shaft 171a by the DC brushless motor 220. Furthermore, two motors connected to the drive shaft 171a are not limited as long as the motors have a difference in torque. That is, for example, instead of the stepping motor 210, a DC brushless motor having a torque larger than that of the DC brushless motor 220 may be used.

As illustrated in Fig. 3, the controller 110 of the image forming apparatus 100 includes an overall control CPU 111 and a motor control CPU 112 and controls the operations of the stepping motor 210 and the DC brushless motor 220.

The controller 110 controls the rotation speed of the stepping motor 210 by transmitting a clock signal (CLK) to the stepping motor 210 and setting an operation frequency of the stepping motor 210. The controller 110 controls the torque of the stepping motor 210 by transmitting a current setting signal $V_S$ to the stepping motor 210 and setting a drive current setting value $I_S$ of the stepping motor 210. As will be described later, the controller 110 receives a voltage $V_R$ corresponding to a drive current measurement value applied to the stepping motor 210 from the stepping motor 210.

The controller 110 controls the torque and the rotation speed of the DC brushless motor 220 by transmitting a PWM signal to the DC brushless motor 220. The torque of the DC brushless motor 220 is controlled by a duty ratio of the PWM signal and the rotation speed is controlled by a frequency of the PWM signal.

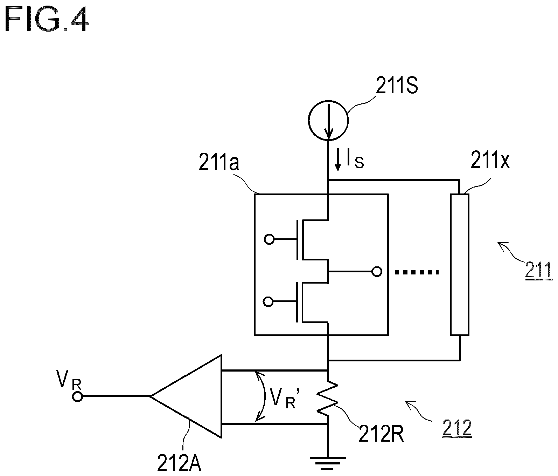

Fig. 4 is a diagram illustrating a motor driver and a drive current measurement circuit provided in the stepping motor.

A motor driver 211 includes a setting current source 211S and inverters 211a to 211x. The motor driver 211 is a circuit which rotates a rotor (not illustrated) of the stepping motor 210 by supplying a pulsed drive current (hereinafter, referred to as a "STM drive current") from the inverters 211a to 211x to a plurality of coils (not illustrated) of the stepping motor 210.

The setting current source 211S supplies a DC current (hereinafter, referred to as a "STM set current") set as the drive current setting value $I_S$ to the inverters 211a to 211x. The STM set current constitutes the drive current setting value of the first motor.

The inverters 211a to 211x convert the STM set current into a pulsed drive current by a clock signal input thereto and output the pulsed drive current to a plurality of coils of the stepping motor 210.

The drive current measurement circuit 212 includes a current detection resistor 212R and an amplification circuit 212A. The current detection resistor 212R is connected between the inverters 211a to 211x and a ground and convert the drive current into a voltage $V_R'$. The amplification circuit 212A generates a voltage $V_R$ corresponding to the STM drive current by amplifying the converted voltage $V_R'$ and transmits the voltage $V_R$ to the controller 110.

An effective value of the STM drive current changes depending on the operation frequency of the stepping motor 210. That is, when the operation frequency of the stepping motor 210 becomes higher, the influence of the parasitic resistance and the parasitic capacitance on the path through which the drive current flows becomes remarkable and the rise time of the STM drive current becomes relatively long, so that the effective value of the STM drive current decreases. Accordingly, the torque of the stepping motor 210 decreases as the operation frequency increases.

The controller 110 calculates the STM drive current as the effective value on the basis of the received voltage $V_R$. Accordingly, the controller 110 obtains a STM drive current measurement value.

The controller 110 calculates the drive current of the DC brushless motor 220 set in the PWM signal transmitted to the DC brushless motor 220 as the effective value. Hereinafter, the drive current of the DC brushless motor 220 will be referred to as a "DCBL drive current". The DCBL drive current set in the PWM signal constitutes the drive current setting value of the second motor. The DCBL drive current may be measured. The controller 110 calculates the total value of the STM drive current and the DCBL drive current as the total value of the consumption current of the stepping motor 210 and the DC brushless motor 220. Hereinafter, the total value of the STM drive current and the DCBL drive current will be referred to as a "total value of a consumption current".

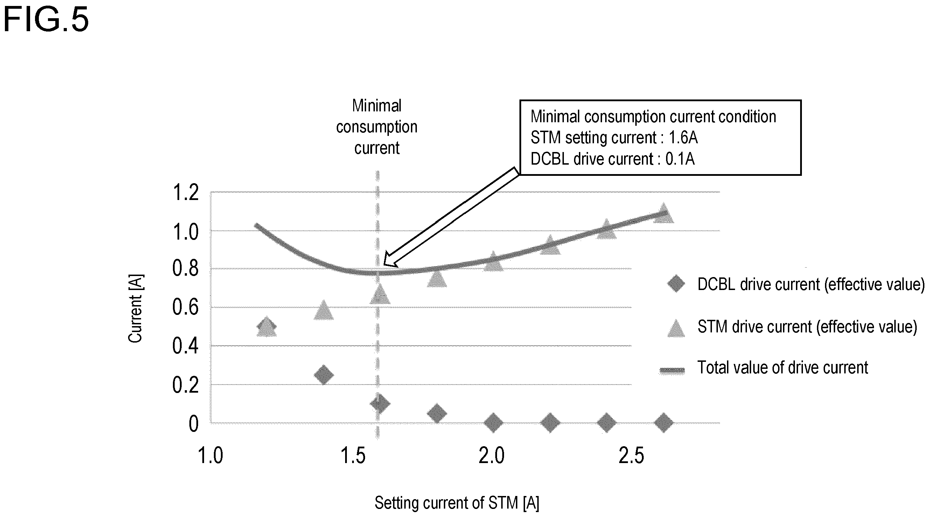

Fig. 5 is a graph showing dependence of the STM drive current, the DCBL drive current, and the total value of the consumption current with respect to the STM set current. The STM drive current and the DCBL drive current are values in a steady state in which the registration roller 171 rotates at a constant setting speed (hereinafter, simply referred to as a "steady state"). The STM drive current and the DCBL drive current are set so that the total value of the torques of these motor becomes equal to or larger than the torque required for the steady state.

The STM drive current decreases as the STM set current decreases. The DCBL drive current increases as the STM set current decreases. This is because the torque of the stepping motor 210 which decreases with a decrease in the STM set current is compensated by increasing the DCBL drive current in order to ensure the torque required for the steady state.

According to the graph, it is understood that the total value of a consumption current becomes minimal when the STM set current is 1.6 A and the DCBL drive current is 0.1 A. It is understood that the STM drive current when the total value of the consumption current becomes minimal is 0.7 A.

The controller 110 sets the STM set current and the DCBL drive current in the steady state so that the total torque which is the total value of the torques of the stepping motor 210 and the DC brushless motor 220 becomes equal to or larger than the torque required in the steady state and the total value of the consumption current becomes minimal. A "case in which the total value of the consumption current becomes minimal" also includes a case in which the sum of the STM drive current and the DCBL drive current becomes a minimum value or slightly larger than the minimum value. The STM drive current is set by setting the STM set current. That is, the setting of the STM set current corresponds to the setting of the STM drive current. The DCBL drive current is set by the duty ratio of the PWM signal.

The controller 110 sets the STM drive current and the DCBL drive current in the steady state so that the total value of the consumption current becomes minimal on the basis of the load condition of the registration roller 171. The load condition can be specified on the basis of a print job. The load condition may be at least one of the sheet types of the conveyed sheet and the sheet conveying speed (linear speed). The sheet type includes concepts of, for example, stiffness, thickness, and basis weight. The load condition may include a nip pressure at a nip portion formed by one roller to which power is transmitted from the stepping motor 210 and the DC brushless motor 220 through the drive shaf and the other roller of the registration roller 171. The load condition includes a temperature. This is because, for example, a roller shape changes due to the temperature so that a load on the roller changes. The load condition may include the load on the roller caused by the pulling of the sheet 500 due to the conveying speed difference of the sheet 500 at the upstream and downstream of the roller.

The controller 110 can calculate the STM set current and the DCBL drive current in which the total value of the consumption current in the steady state becomes minimal on the basis of a predetermined relational expression. The controller 110 sets the STM set current and the DCBL drive current which are calculated as described above as the STM set current and the DCBL drive current in the steady state.

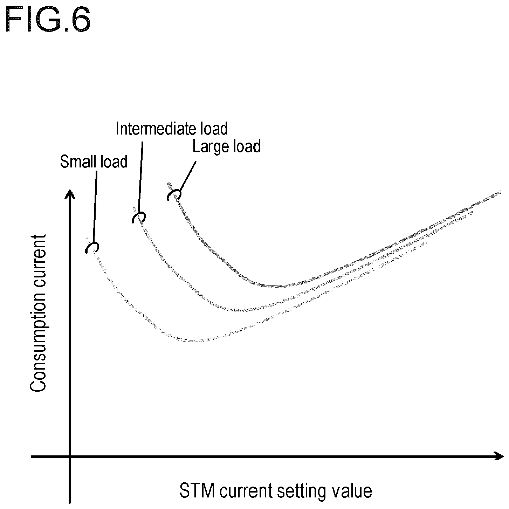

Fig. 6 is a graph showing load condition dependence of a relationship between the STM set current and the total value of the consumption current.

According to the graph, it is understood that the total value of the consumption current increases as a load increases.

A relationship between the total value of the consumption current and the STM set current for each load condition in the steady state can be expressed by, for example, Relational Expression (1).

$$y = a(x + b + \lambda)^2 + c + \lambda' \quad (1)$$

Here, y is the total value of the consumption current [A], x is the STM set current [A], $\lambda$ and $\lambda'$ indicate correction constants corresponding to the load condition, and a to c indicate constants. a to c can be obtained by, for example, an experiment. $\lambda$ and $\lambda'$ constitute a first load parameter and are constants for correcting the relationship between the STM set current and the total value of the consumption current for each load condition. $\lambda$ and $\lambda'$ are each determined and obtained by, for example, an experiment.

As detailed examples of Expression (1), Expressions (2) to (4) below are shown. Expression (2) is an expression when the load is relatively small, Expression (3) is an expression when the load is intermediate, and Expression (4) is an expression when the load is relatively large.

$$y = 2.7(x - 0.7)^2 + 0.9 \quad (2)$$

$$y = 2.7(x - 1.4)^2 + 1.5 \quad (3)$$

$$y = 2.7(x - 2.0)^2 + 2.3 \quad (4)$$

By Expression (1), it is possible to calculate the STM set current in which the total value of the consumption current in the steady state becomes minimal. The calculated STM set current is a setting value for setting the STM drive current and constitutes a first setting value.

The DCBL drive current at the time of setting the STM set current in which the total value of the consumption current in the steady state becomes minimal can be calculated from the relational expression showing a relationship between the STM set current and the DCBL drive current. As a specific example of the relational expression showing a relationship between the STM set current and the DCBL drive current, Expression (5) below is shown.

$$z = 2.7(x' - 0.925)^2 - 0.015 \quad (5)$$

Here, z is the DCBL drive current [A] and x' is the STM set current [A] in which the total value of the consumption current in the steady state becomes minimal. The constants in the expression is a correction constant for correcting the relationship between the STM set current and the DCBL drive current for each load condition and constitutes a second load parameter. The correction constant can be obtained by, for example, an experiment. When the DCBL drive current in Expression (5) becomes a negative value, the DCBL drive current is set to 0.

The DCBL drive current calculated by Expression (5) constitutes a second setting value.

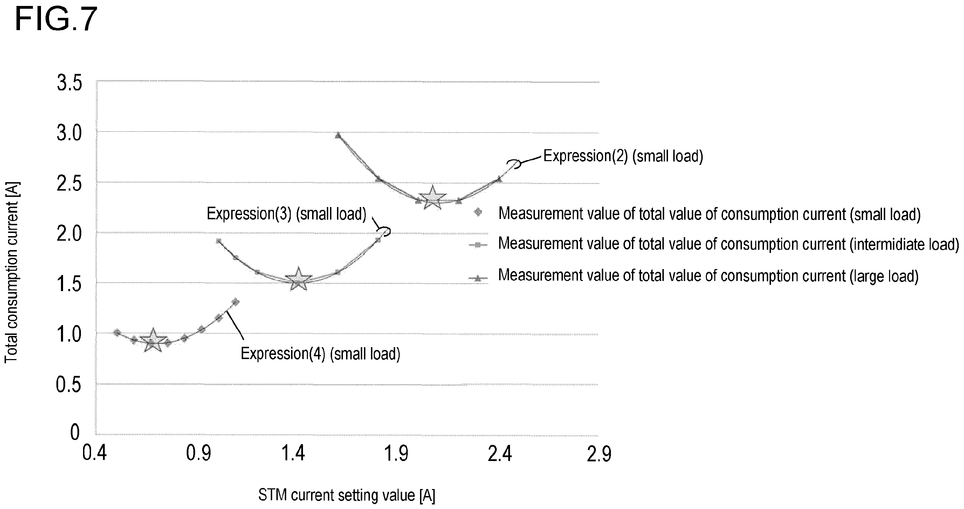

Fig. 7 is a graph showing the relationship between the STM set current and the total value of the consumption current in the steady state calculated on the basis of a predetermined relational expression. The predetermined relational expression indicates Expressions (2) to (4) described above. Fig. 7 also shows plots of measurement values of the relationship between the STM set current and the total value of the consumption current in the steady state.

According to Fig. 7, the relationship between the STM set current and the total value of the consumption current in the steady state calculated on the basis of the predetermined relational expression is similar to the measurement value. Further, as indicated by an asterisk location, a calculation value obtained by the predetermined relational expression of the STM set current in which the total value of the consumption current in the steady state becomes minimal is similar to the measurement value.

The controller 110 can previously generate and store a table that the STM set current and the DCBL drive current in which the total value of the consumption current in the steady state becomes minimal are registered for each load condition. The controller 110 can set the STM set current and the DCBL drive current as the STM set current and the DCBL drive current setting value in a steady state for each load condition by referring to the table.

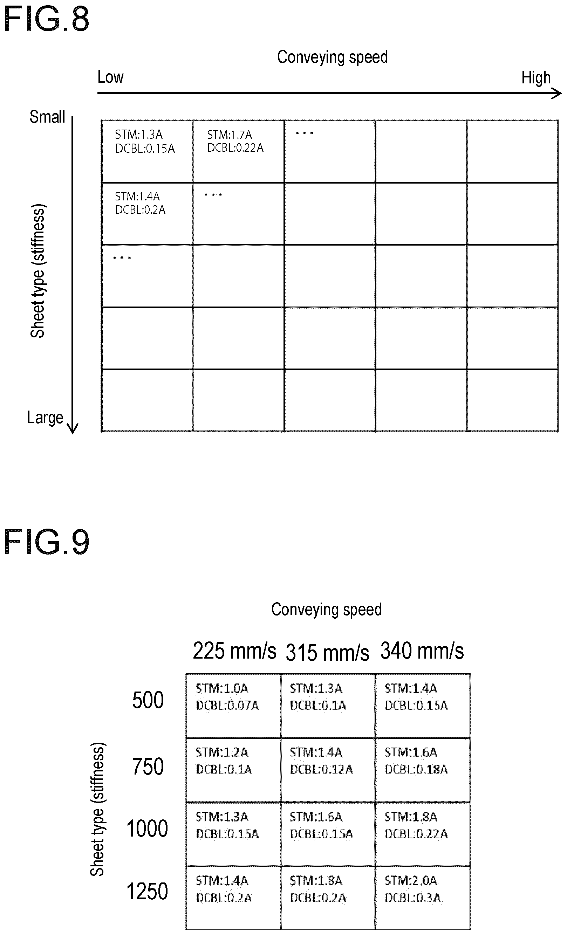

Fig. 8 is a diagram illustrating an example of the table that the STM set current and the DCBL drive current in which the total value of the consumption current in the steady state becomes minimal are registered for each load condition. The load condition is the sheet type and the conveying speed. Specifically, the load condition of the sheet type is the stiffness of the sheet. Fig. 9 is a diagram illustrating specified examples of the load condition and the registered value in the table that the STM set current and the DCBL drive current in which the total value of the consumption current in the steady state becomes minimal are registered for each load condition.

According to the table, the STM set current and the DCBL drive current increase as the conveying speed increases. Furthermore, the total value of the consumption current decreases in a case in which the STM set current increases as the conveying speed increases. Further, when the stiffness of the sheet increases, since the current required for driving the stepping motor 210 and the DC brushless motor 220 increases, the STM set current and the DCBL drive current increase.

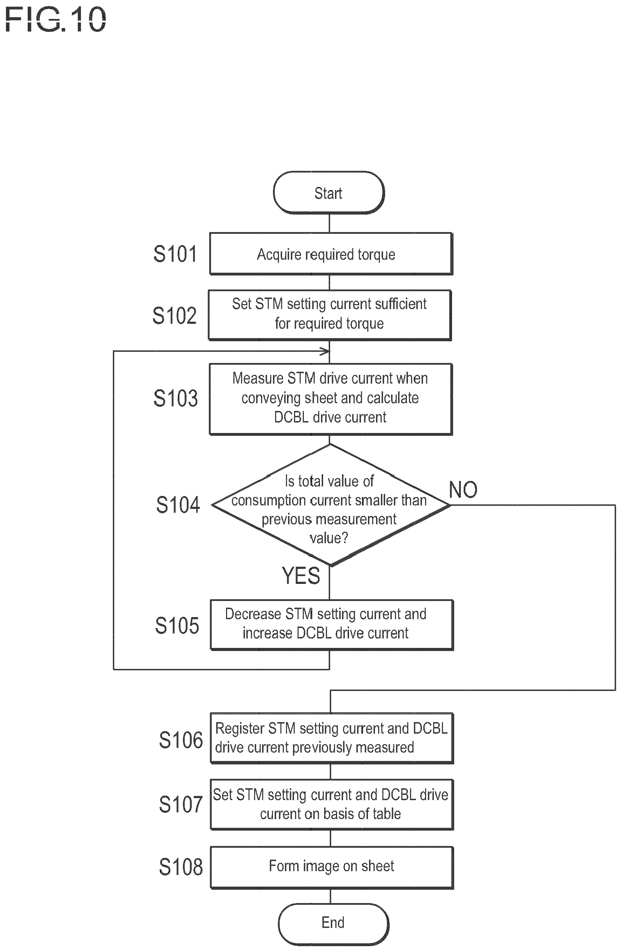

Fig. 10 is a flowchart illustrating an operation of the image forming apparatus. The flowchart can be performed according to a program by the controller 110 of the image forming apparatus 100.

The controller 110 acquires the torque (hereinafter, referred to as the "required torque") required for transmitting power to the drive shaft 171a of the registration roller 171 in the steady state (S101). The controller 110 can acquire the required torque corresponding to the load condition specified on the basis of the print job by referring to the table in which the required torque is registered for each load condition.

The controller 110 sets the STM set current sufficient for the required torque (S102). That is, the controller 110 sets the STM set current for generating a torque having a margin with respect to the required torque in the stepping motor 210.

The controller 110 measures the total value of the consumption current by measuring the STM drive current at the time of conveying the sheet in the steady state and calculating the DCBL drive current (S103).

The controller 110 determines whether the total value of the consumption current is smaller than a previous measurement value (S104).

When the total value of the consumption current is smaller than the previous measurement value (S104: YES), the controller 110 decreases the STM set current to decrease the STM drive current and increase the DCBL drive current (S105). The controller 110 repeats step S103 to step S105 until the total value of the consumption current becomes equal to or larger than the previous measurement value.

When the total value of the consumption current is not smaller than the previous measurement value (S104: NO), the controller 110 generates the table by registering the STM set current and the DCBL drive current set in the previous measurement (S106).

In this way, the table is generated by the processes of steps S101 to S106. Then, after the table is generated, the controller 110 sets the STM set current and the DCBL drive current in the steady state on the basis of the table (S107) and forms an image on the conveyed sheet (S108).

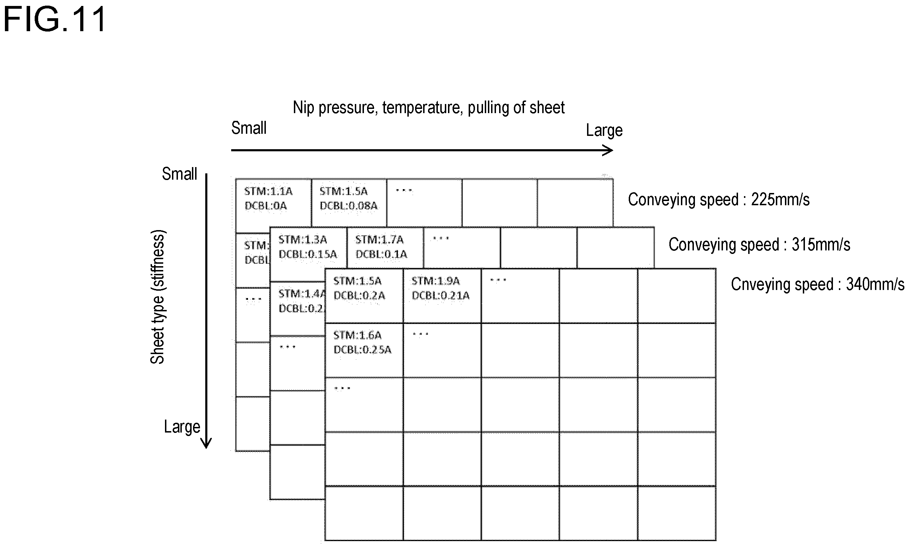

Fig. 11 is a diagram illustrating another example of the table that the STM set current and the DCBL drive current in which the total value of the consumption current in the steady state becomes minimal are registered for each load condition. The load condition is at least one of the sheet type, the conveying speed, the nip pressure, the temperature, and the load on the roller caused by the pulling of the sheet due to a conveying speed difference of the sheet 500 at the upstream and downstream of the roller. The load condition of the sheet type may be the stiffness of the sheet. In this example, the STM set current and the DCBL drive current in which the total value of the consumption current in the steady state becomes minimal are registered by the combination of three load conditions. For this reason, the table of the STM set current and the DCBL drive current under two load conditions of the sheet type and either of the nip pressure, the temperature, and the load on the roller caused by the pulling of the sheet due to the sheet conveying speed difference at the upstream and downstream of the roller. Further, the table of the STM set current and the DCBL drive current under the two load conditions is required for each load conditions other than the two load conditions, for example, each conveying speed setting value.

According to the table, the load on the registration roller 171 increases as the load due to any one of the load conditions increases. For this reason, the STM set current and the DCBL drive current required for driving the stepping motor 210 and the DC brushless motor 220 increase.

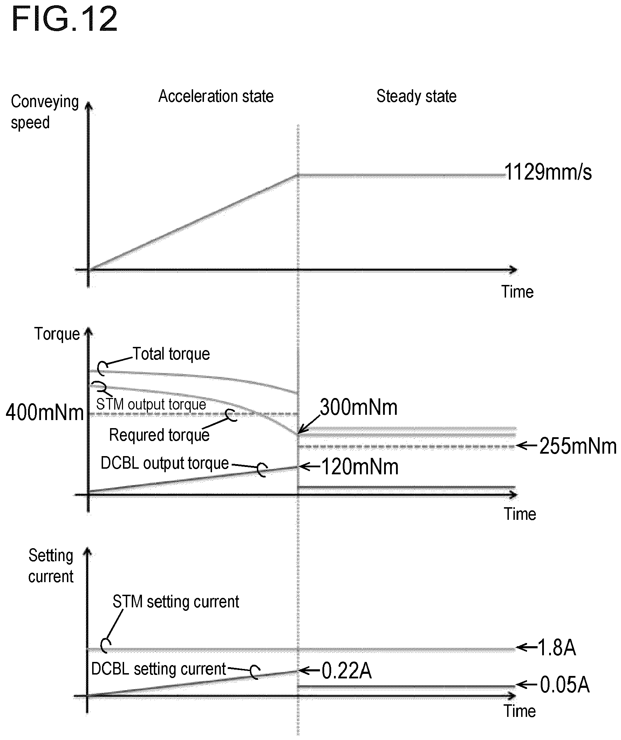

Fig. 12 is a timing chart showing the torques of the stepping motor and the DC brushless motor, the STM set current, and the DCBL drive current in an acceleration state and the steady state along with the conveying speed and the required torque.

In the acceleration state, the controller 110 increases the conveying speed to a speed in the steady state from 0 at the time of starting the conveying operation. The STM set current is set so that the required torque is sufficiently obtained only by the torque of the stepping motor 210 at the time of starting the conveying operation. That is, the DCBL drive current is set to 0 at the time of starting the conveying operation and the DCBL drive current is linearly increased in accordance with an increase in rotation speed of the stepping motor 210. When the DCBL drive current is linearly increased, the torque of the DC brushless motor 220 is linearly increased.

In the acceleration state, when the conveying speed increases as the rotation speed of the stepping motor 210 increases, the torque of the stepping motor 210 decreases. This is because the rise time of the pulsed STM drive current relatively increases and the effective value of the STM drive current decreases when the operation frequency of the stepping motor 210 increases as described above. As a result, the required torque in the acceleration state is not obtained only by the torque of the stepping motor 210. However, when the torque of the DC brushless motor 220 which increases linearly is supplementally added to the torque of the stepping motor 210, the total torque of the stepping motor 210 and the DC brushless motor is sufficient for the required torque in the acceleration state. The required torque in the acceleration state can be calculated by a general expression on the basis of the inertia moment of the registration roller 171, the characteristic of the stepping motor 210, the load torque on the stepping motor 210, and the rotation speed of the registration roller 171. The required torque in the acceleration state is, for example 400 mNm.

The controller 110 controls the conveying speed at a constant speed in the steady state. The conveying speed in the steady state is, for example, 1129 mm/s.

Since the required torque in the steady state does not need the torque for an acceleration, the required torque decreases as compared with the acceleration state. The required torque in the steady state is, for example, 255 mNm. The controller 110 sets the STM set current and the DCBL drive current in the steady state so that the total torque of the stepping motor 210 and the DC brushless motor 220 is equal to or larger than the required torque in a steady state and the total value of the consumption current becomes minimal. The STM set current in the steady state is, for example, 1.8 A. The DCBL drive current in the steady state is, for example, 0.05 A.

(Second Embodiment)

A second embodiment of the present invention will be described. The embodiment is different from the first embodiment as below. That is, in this embodiment, a test mode is performed in a case in which a special sheet not corresponding to any load condition of the table in which the STM set current and the DCBL drive current are registered for each load condition is conveyed and an image is formed thereon. Since the other points of this embodiment are the same as those of the first embodiment, a repetitive description will be omitted or simplified.

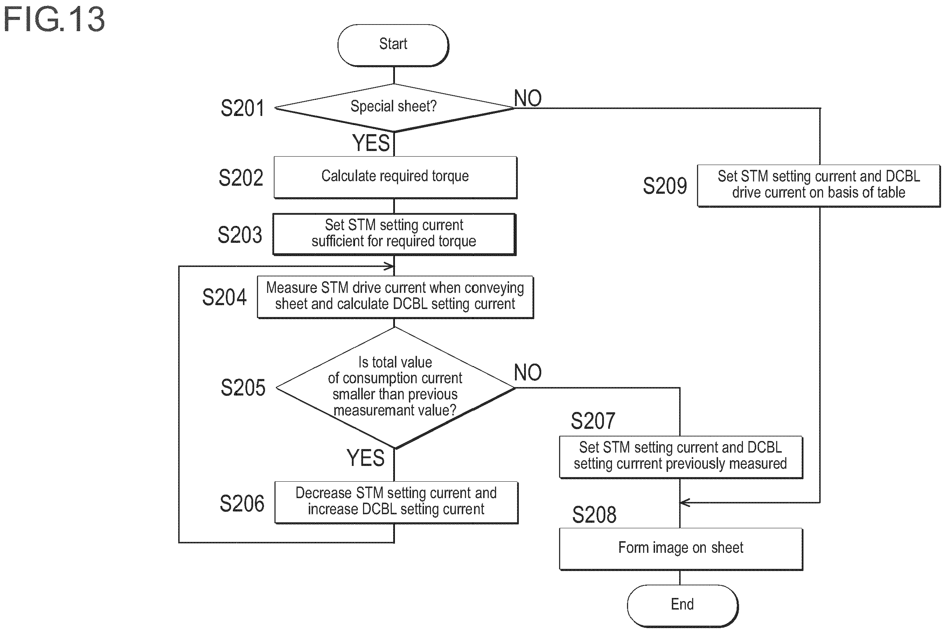

Fig. 13 is a flowchart illustrating an operation of the image forming apparatus. The flowchart can be performed according to a program by the controller 110 of the image forming apparatus 100.

The controller 110 determines whether the sheet for forming the image thereon is the special sheet on the basis of the print job (S201).

When the sheet to form the image thereon is not the special sheet (S201: NO), the controller 110 sets the STM set current and the DCBL drive current on the basis of the table (S209) and forms the image on the conveyed sheet (S208).

When the sheet to form the image thereon is the special sheet (S201: YES), the controller 110 performs the test mode by steps S202 to S207.

The controller 110 calculates the required torque (S202). The required torque can be calculated on the basis of the thickness and the stiffness of the sheet. The material of the roller or the roller diameter of the registration roller 171 to which the power is transmitted from the stepping motor 210 and the DC brushless motor 220 through the drive shaft can be considered in the calculation of the required torque. The required torque may be calculated by referring to a torque table registered for each of the thickness and the stiffness of the sheet.

The controller 110 sets the STM set current sufficient for the required torque (S203).

The controller 110 measures the total value of the consumption current by measuring the STM drive current at the time of conveying the sheet in the steady state and calculating the DCBL drive current (S204).

The controller 110 determines whether the total value of the consumption current is smaller than the previous measurement value (S205).

When the total value of the consumption current is smaller than the previous measurement value (S205: YES), the controller 110 decreases the STM set current to decrease the STM drive current and to increase the DCBL drive current (S206). The controller 110 repeats step S204 to step S206 until the total value of the consumption current becomes equal to or larger than the previous measurement value.

When the total value of the consumption current is not smaller than the previous measurement value (S205: NO), the controller 110 sets the STM set current and the DCBL drive current set in the previous measurement as the STM set current and the DCBL drive current in the steady state (S207) and forms the image on the conveyed sheet (S208).

The embodiment according to the present invention has the following effects.

When the same drive shaft is driven by different torques of two motors, it is possible to suppress the consumption current of the motor in the steady state by optimizing each motor drive current setting value.

Further, each motor drive current setting value is optimized so that the total value of the consumption current becomes minimal on the basis of the load condition. Accordingly, it is possible to improve the motor consumption current suppressing effect in the steady state.

Further, the load condition is set to at least any one of the sheet types and the conveying speed of the sheet conveyed by the roller to which power is transmitted from two motors through the drive shaft. Accordingly, it is possible to more simply and effectively suppress the motor consumption current in the steady state.

Further, the first motor which is one of the two motors is set as the stepping motor and the second motor having the torque smaller than that of the first motor is set as the DC brushless motor. Accordingly, it is possible to more simply obtain the drive current setting value optimized to each motor.

Further, each drive current setting value in which the total value of the consumption current which changes by decreasing the drive current setting value of the first motor from a current value for generating the required torque and increasing the drive current setting value of the second motor becomes minimal is set at the time of setting each motor drive current setting value in which the total value of the consumption current becomes minimal. Accordingly, it is possible to efficiently obtain the drive current setting value optimized to each motor.

Further, the drive current setting value of the first motor in which the total value of the consumption current becomes minimal is calculated as the first setting value from the relational expression of the drive current setting value of the first motor and the total value of the consumption current corrected by the first load parameter depending on the load condition. The second motor drive current setting value obtained by applying the first setting value to the relational expression of the drive current setting value of the second motor and the first setting value corrected by the second load parameter depending on the load condition is calculated as the second setting value. Then, each motor drive current is set on the basis of the first setting value and the second setting value. Accordingly, it is possible to reduce a storage capacity necessary for calculating the drive current setting value optimized to each motor.

Further, each motor drive current setting value is set by referring to the table that each motor drive current setting value in which the total value of the consumption power becomes minimal is registered for each load condition. Accordingly, it is possible to shorten a calculation time for calculating the drive current setting value optimized to each motor.

Further, the second motor drive current is linearly increased in accordance with an increase in rotation speed of the first motor at the time of increasing the conveying speed to the setting speed in the steady state. Accordingly, since the torque at the low conveying speed can be ensured only by the first motor, it is possible to reduce consumption power and to prevent from stepping out by preventing an excessive torque from being supplied by the second motor in an acceleration state.

Further, the load condition includes the nip pressure at the nip portion formed by the roller and the other roller. Accordingly, it is possible to suppress the motor consumption current according to the actual machine condition.

Further, the load condition includes the temperature. Accordingly, it is possible to more suppress the motor consumption current according to the actual machine condition.

Further, the load condition includes the load on the roller due to the pulling of the sheet caused by the conveying speed difference at the upstream and downstream of the roller. Accordingly, it is possible to further suppress the motor consumption current according to the actual machine condition.

Further, the test mode is performed when the sheet type of the conveyed sheet is the special sheet not corresponding to any load condition of the table that each motor drive current setting value in which the total value of the consumption power becomes minimal is registered for each load condition. Accordingly, it is possible to suppress the motor consumption current by coping with the special sheet not registered in advance.

The conveying driving device, the conveying driving device control method and program, the motor drive current setting table generating method and program, the image forming apparatus, and the image forming apparatus control method and program of the present invention are not limited to the above-described embodiment.

For example, the conveying driving device of the present invention can be applied as the conveying driving device of the loop roller and the other rollers.

Further, in the embodiment, a part or all of the processes performed by the program may be performed by hardware such as a circuit.

Although embodiments of the present invention have been described and illustrated in detail, the disclosed embodiments are made for purpose of illustration and example only and not limitation. The scope of the present invention should be interpreted by terms of the appended claims.

**Claims**

1. A conveying driving device comprising:

   a first motor (210) which transmits power to a drive shaft (171a) of a roller (171);
   a second motor (220) which transmits power to said drive shaft (171a) along with said first motor (210) at a torque smaller than that of said first motor ; and
   a controller (110) which sets each of drive current setting values of said first motor (210) and said second motor so that a total value of a consumption current of said first motor and said second motor becomes minimal in a steady state in which said roller (171) rotates at a constant setting speed.

2. The conveying driving device according to claim 1, wherein said controller (110) sets each of the drive current setting values of said first motor (210) and said second motor (220) in the steady state so that the total value of the consumption current of said first motor and said second motor becomes minimal in said steady state on the basis of a load condition on said roller (171).

3. The conveying driving device according to claim 2, wherein said load condition is at least one of a sheet type and a conveying speed of a recording medium conveyed by said roller (171).

4. The conveying driving device according to any one of claims 1 to 3,
   wherein said first motor (210) is a stepping motor and said second motor (220) is a DC brushless motor.

5. The conveying driving device according to any one of claims 1 to 4,
   wherein said controller measures the total value of said consumption current which changes by decreasing the drive current setting value of said first motor (210) in said steady state from a current value for generating a torque equal to or larger than a torque for transmitting required power to said drive shaft (171a) in said steady state and increasing the drive current setting value of said second motor (220) and sets each of the drive current setting values of said first motor and said second motor when the total value of said measured consumption current becomes minimal as the drive current setting values of said first motor and said second motor in the steady state.

6. The conveying driving device according to claim 2, wherein said controller (110) calculates the drive current setting value of said first motor (210) in which the total value of said consumption current in said steady state becomes minimal as a first setting value from a relational expression of the drive current setting value of said first motor in said steady state and the total value of said consumption current in said steady state corrected by a first load parameter depending on said load condition, calculates the drive current setting value of said second motor (220) obtained by applying said calculated first setting value to a relational expression of the drive current setting value of said second motor in said steady state and said first setting value corrected by a second load parameter depending on said load condition as a second setting value, and sets each of the drive current setting values of said first motor and said second motor in said steady state on the basis of said first setting value and said second setting value.

7. The conveying driving device according to claim 2, wherein said controller (110) sets each of the drive current setting values of said first motor (210) and said second motor (220) in said steady state for each said load condition by referring to a table that the drive current setting values of said first motor and said second motor when the total value of said consumption current in said steady state becomes minimal are registered for each said load condition.

8. The conveying driving device according to any one of claims 1 to 7,
   wherein said controller (110) linearly increases the drive current setting value of said second motor (220) in accordance with an increase in rotation speed of said first motor (210) at the time of increasing the rotation speed of said roller (171) to said setting speed in said steady state.

9. The conveying driving device according to claim 2, wherein said load condition includes a nip pressure at a nip portion formed by said roller (171) and the other roller.

10. The conveying driving device according to claim 2 or 9,
    wherein said load condition includes a temperature.

11. The conveying driving device according to any one of claims 2, 9, and 10,
    wherein said load condition includes a load on said roller (171) due to the pulling of the recording medium caused by a conveying speed difference at the upstream and downstream of said roller.

12. The conveying driving device according to claim 7, wherein said controller (110) performs a test mode when a sheet type of said recording medium conveyed by said roller (171) is a special sheet not corresponding to any said load condition of said table that the drive current setting values of said first motor (210) and said second motor (220) are registered for each said load condition, and

wherein in said test mode, the controller (110) calculates a torque for transmitting required power to said drive shaft (171a) in said steady state on the basis of a thickness and a stiffness of said recording medium, measures a total value of a drive current of said first motor (210) and said second motor (220) in said steady state at the time of conveying said recording medium by said roller after setting the drive current setting value of said first motor to a value for generating a torque equal to or larger than at least the calculated torque, and determines the drive current setting values of said first motor and said second motor when the total value of the consumption current of said first motor and said second motor becomes minimal by repeatedly decreasing the drive current setting value of said first motor and increasing the drive current setting value of said second motor until the measurement value becomes equal to or larger than the previously measured total value of the drive current of said first motor and said second motor when the previously measured value is smaller than the total value of the drive current of said first motor and said second motor.

13. A control method for a conveying driving device comprises a first motor (210) which transmits power to a drive shaft (171a) of a roller (171) and a second motor (220) which transmits power to said drive shaft along with said first motor at a torque smaller than that of said first motor, the control method comprising:

a step of setting each of drive current setting values of said first motor (210) and said second motor (220) so that a total value of a consumption current of said first motor and said second motor becomes minimal in a steady state in which said roller (171) is rotated at a constant setting speed.

14. A control program for a conveying driving device comprises a first motor (210) which transmits power to a drive shaft (171a) of a roller (171) and a second motor (220) which transmits power to said drive shaft along with said first motor at a torque smaller than that of said first motor, the control program causing a computer to perform a step of setting each of drive current setting values of said first motor and said second motor so that a total value of a consumption current of said first motor and said second motor becomes minimal in a steady state in which said roller is rotated at a constant setting speed.

15. A method of generating a table used to set drive current setting values of a first motor (210) and a second motor (220) in a steady state in which a roller (171) rotates at a constant setting speed in a conveying driving device, the conveying riving device comprises said first motor which transmits power to a drive shaft of said roller and said second motor which transmits power to said drive shaft along with said first motor at a torque smaller than that of said first motor,

the method of generating the table comprising:

step (a) of measuring a total value of a consumption current of said first motor (210) and said second motor (220) which changes by decreasing the drive current setting value of said first motor in said steady state from a current value for generating a torque equal to or larger than a torque for transmitting required power to said drive shaft (171a) in said steady state and increasing the drive current setting value of said second motor;

step (b) of determining the drive current setting values of said first motor and said second motor when the total value of said measured consumption current becomes minimal; and

step (c) of generating said table by registering the determined drive current setting values of said first motor (210) and said second motor (220).

16. The method of generating the motor drive current setting table according to claim 15,

wherein in said step (a), the total value of said consumption current of said first motor (210) and said second motor (220) is measured for each load condition on said roller (171),

wherein in said step (b), the drive current setting values of said first motor (210) and said second motor (220) when the total value of said measured consumption current becomes minimal are determined for each said load condition, and

wherein in said step (c), the drive current setting values of said first motor (210) and said second motor (220) determined for each said load condition are registered to generate said table.

17. A program for generating a table used to set drive current setting values of a first motor (210) and a second motor (220) in a steady state in which a roller (171) rotates at a constant setting speed in a conveying driving device, the conveying driving device comprises said first motor which transmits power to a drive shaft of said roller and said second motor which transmits power to said drive shaft along with said first motor at a torque smaller than that of said first motor, the program causing a computer to perform:

step (a) of measuring a total value of a consumption current of said first motor (210) and said second motor (220) which changes by decreasing the drive current setting value of said first motor in said steady state from a current value for generating a torque equal to or larger than a torque for transmitting required power to said drive shaft (171a) in said steady state and increasing the drive current setting value of said second motor;

step (b) of determining the drive current setting values of said first motor (210) and said second motor (220) when the total value of said measured consumption current becomes minimal; and

step (c) of generating said table by registering the determined drive current setting values of said first motor (210) and said second motor (220).

18. The program for generating the motor drive current setting table according to claim 17,
wherein in said step (a), the total value of said consumption current of said first motor (210) and said second motor (220) is measured for each load condition of said roller (171),
wherein in said step (b), the drive current setting values of said first motor (210) and said second motor (220) when the total value of said measured consumption current becomes minimal are determined for each said load condition, and
wherein in said step (c), the drive current setting values of said first (210) motor and said second motor (220) determined for each said load condition are registered to generate said table.

19. An image forming apparatus comprising:

a first motor (210) which transmits power to a drive shaft (171a) of a roller (171) conveying a recording medium;
a second motor (220) which transmits power to said drive shaft (171a) along with said first motor (210) at a torque smaller than that of said first motor;
a controller (110) which sets each of drive current setting values of said first motor (210) and said second motor (220) so that a total value of a consumption current of said first motor and said second motor becomes minimal in a steady state in which said roller (171) rotates at a constant setting speed; and
an image former (140) which forms an image on said conveyed recording medium.

20. The image forming apparatus according to claim 19, further comprising:

a storage (110) which stores a table that the drive current setting values of said first motor (210) and said second motor (220) when the total value of said consumption current becomes minimal in said steady state are determined for each load condition on said roller (171),
wherein said controller (110) sets each of the drive current setting values of said first motor (210) and said second motor (220) in said steady state for each said load condition by referring to said table.

21. A control method for an image forming apparatus comprises a first motor (210) which transmits power to a drive shaft (171a) of a roller (171) conveying a recording medium, a second motor (220) which transmits power to said drive shaft along with said first motor at a torque smaller than that of said first motor, and an image former (140) which forms an image on said conveyed recording medium, the control method for the image forming apparatus comprising:

step (a) of specifying a load condition on said roller (171) on the basis of a print job;
step (b) of determining drive current setting values of said first motor (210) and said second motor (220) corresponding to said specified load condition by referring to a table that the drive current setting values of said first motor and said second motor when a total value of a consumption current of said first motor and said second motor in a steady state in which said roller (171) rotates at a constant setting speed becomes minimal are determined for each said load condition; and
step (c) of setting the drive current setting values of said first motor (210) and said second motor (220) in said steady state on the basis of the determined drive current setting values of said first motor and said second motor.

22. A control program for an image forming apparatus comprises a first motor (210) which transmits power to a drive shaft (171a) of a roller (171) conveying a recording medium, a second motor (220) which transmits power to said drive shaft along with said first motor at a torque smaller than that of said first motor, and an image former (140) which forms an image on said conveyed recording medium, the control program causing a computer to perform:

step (a) of specifying a load condition on said roller (171) on the basis of a print job;
step (b) of determining drive current setting values of said first motor (210) and said second motor (220) corresponding to said specified load condition by referring to a table that the drive current setting values of said first motor and said second motor when a total value of a consumption current of said first motor and said second motor in a steady state in which said roller (171) rotates at a constant setting speed becomes minimal are determined for each said load condition; and

step (c) of setting the drive current setting values of said first motor (210) and said second motor (220) in said steady state on the basis of the determined drive current setting values of said first motor and said second motor.

EP 3 496 262 A1

FIG.1

# FIG.2

200

# FIG.3

FIG.4

# FIG.5

Minimal consumption current

Minimal consumption current condition
STM setting current : 1.6A
DCBL drive current : 0.1A

◆ DCBL drive current (effective value)

▲ STM drive current (effective value)

▬ Total value of drive current

Current [A]

1.2
1.0
0.8
0.6
0.4
0.2
0

Setting current of STM [A]

1.0        1.5        2.0        2.5

EP 3 496 262 A1

# FIG.6

FIG.7

Total consumption current [A]

STM current setting value [A]

Expression(2) (small load)

Expression(3) (small load)

Expression(4) (small load)

Measurement value of total value of consumption current (small load)

Measurement value of total value of consumption current (intermidiate load)

Measurement value of total value of consumption current (large load)

# FIG.8

Conveying speed

Low ——————————————————————→ High

| | | | | |
|---|---|---|---|---|
| STM:1.3A<br>DCBL:0.15A | STM:1.7A<br>DCBL:0.22A | · · · | | |
| STM:1.4A<br>DCBL:0.2A | · · · | | | |
| · · · | | | | |
| | | | | |
| | | | | |

Small — Sheet type (stiffness) — Large

# FIG.9

Conveying speed

| | 225 mm/s | 315 mm/s | 340 mm/s |
|---|---|---|---|
| 500 | STM:1.0A<br>DCBL:0.07A | STM:1.3A<br>DCBL:0.1A | STM:1.4A<br>DCBL:0.15A |
| 750 | STM:1.2A<br>DCBL:0.1A | STM:1.4A<br>DCBL:0.12A | STM:1.6A<br>DCBL:0.18A |
| 1000 | STM:1.3A<br>DCBL:0.15A | STM:1.6A<br>DCBL:0.15A | STM:1.8A<br>DCBL:0.22A |
| 1250 | STM:1.4A<br>DCBL:0.2A | STM:1.8A<br>DCBL:0.2A | STM:2.0A<br>DCBL:0.3A |

Sheet type (stiffness)

# FIG.10

```
                    ┌──────────────┐
                    │    Start     │
                    └──────┬───────┘
                           │
         ┌─────────────────┴─────────────────┐
  S101   │        Acquire required torque     │
         └─────────────────┬─────────────────┘
         ┌─────────────────┴─────────────────┐
  S102   │   Set STM setting current sufficient │
         │         for required torque        │
         └─────────────────┬─────────────────┘
                           │
         ┌─────────────────┴─────────────────┐
         │   Measure STM drive current when   │
  S103   │    conveying sheet and calculate   │
         │         DCBL drive current         │
         └─────────────────┬─────────────────┘
                           │
                     ◇─────┴─────◇
                   Is total value of        NO
  S104      consumption current smaller than ──────┐
                previous measurement               │
                      value?                       │
                     ◇─────┬─────◇                 │
                        YES │                       │
         ┌─────────────────┴─────────────────┐     │
  S105   │   Decrease STM setting current and │     │
         │     increase DCBL drive current    │     │
         └─────────────────┬─────────────────┘     │
                           │                        │
         ┌─────────────────┴─────────────────┐     │
  S106   │ Register STM setting current and DCBL│◄──┘
         │  drive current previously measured │
         └─────────────────┬─────────────────┘
         ┌─────────────────┴─────────────────┐
  S107   │ Set STM setting current and DCBL drive│
         │      current on basis of table     │
         └─────────────────┬─────────────────┘
         ┌─────────────────┴─────────────────┐
  S108   │        Form image on sheet         │
         └─────────────────┬─────────────────┘
                    ┌──────┴───────┐
                    │     End      │
                    └──────────────┘
```

# FIG.11

Nip pressure, temperature, pulling of sheet

Small ⟶ Large

Sheet type (stiffness): Small ⟶ Large

| | | | | |
|---|---|---|---|---|
| STM:1.1A DCBL:0A | STM:1.5A DCBL:0.08A | · · · | | |

Conveying speed : 225mm/s

| | | | | |
|---|---|---|---|---|
| STM: DCBL | STM:1.3A DCBL:0.15A | STM:1.7A DCBL:0.1A | · · · | |

Conveying speed : 315mm/s

| | | | | |
|---|---|---|---|---|
| · · · | STM:1.4A DCBL:0.2 | STM:1.5A DCBL:0.2A | STM:1.9A DCBL:0.21A | · · · |
| | · · · | STM:1.6A DCBL:0.25A | · · · | |
| | | · · · | | |

Cnveying speed : 340mm/s

EP 3 496 262 A1

# FIG.12

Conveying speed

Acceleration state          Steady state

1129mm/s

Time

Torque

Total torque

400mNm

STM output torque

Requred torque

300mNm

255mNm

DCBL output torque

120mNm

Time

Setting current

STM setting current

1.8A

DCBL setting current

0.22A

0.05A

Time

# FIG.13

```
                    ┌──────────┐
                    │  Start   │
                    └──────────┘
                         │
S201        ◇ Special sheet? ◇ ──NO──────────────────────┐
                   │                                       │
                  YES                            S209  ┌─────────────────────────┐
                   │                                    │ Set STM setting current │
S202  ┌─────────────────────────┐                       │ and DCBL drive current  │
      │ Calculate required torque│                       │ on basis of table       │
      └─────────────────────────┘                       └─────────────────────────┘
                   │
S203  ┌─────────────────────────┐
      │ Set STM setting current  │
      │ sufficient for required  │
      │ torque                   │
      └─────────────────────────┘
                   │
S204  ┌──────────────────────────────┐
      │ Measure STM drive current when│
      │ conveying sheet and calculate │
      │ DCBL setting current          │
      └──────────────────────────────┘
                   │
S205    ◇ Is total value of         ◇ ──NO──┐
          consumption current                │
          smaller than previous      S207 ┌─────────────────────────┐
          measuremant value?              │ Set STM setting current  │
                   │                        │ and DCBL setting currrent│
                  YES                       │ previously measured      │
                   │                        └─────────────────────────┘
S206  ┌─────────────────────────┐                        │
      │ Decrease STM setting     │           S208 ┌───────────────────┐
      │ current and increase     │                │ Form image on sheet│
      │ DCBL setting current     │                └───────────────────┘
      └─────────────────────────┘                         │
                                                    ┌──────────┐
                                                    │   End    │
                                                    └──────────┘
```

EP 3 496 262 A1

Europäisches
Patentamt

European
Patent Office

Office européen
des brevets

**EUROPEAN SEARCH REPORT**

Application Number

EP 18 21 0065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2017 184378 A (KONICA MINOLTA INC) 5 October 2017 (2017-10-05) | 1,13,14, 19 | INV. H02P5/00 |
| Y | * paragraph [0007] - paragraph [0014]; claims 1-7; figures 1-4 * | 2-11, 20-22 | H02P5/68 H02P5/69 |
| A | * paragraph [0024] - paragraph [0025] * * paragraph [0056] - paragraph [0057] * ----- | 12,15-18 | H02P7/00 H02P8/00 H02P8/12 |
| X | US 2009/315503 A1 (YOSHIHISA YASUHIKO [JP] ET AL) 24 December 2009 (2009-12-24) | 1,13,14, 19 | H02P8/16 B41J11/00 |
| Y | * paragraph [0012] - paragraph [0013]; claims 1-6; figures 2-5 * | 2-11, 20-22 | |
| A | * paragraph [0017] - paragraph [0019] * * paragraph [0023] * * paragraph [0036] * * paragraph [0048] - paragraph [0052] * * paragraph [0061] * ----- | 12,15-18 | |
| A,P | US 2018/095393 A1 (HIROTA JUNICHI [JP] ET AL) 5 April 2018 (2018-04-05) * paragraph [0040] * ----- | 10 | |
| A,P | JP 2018 161003 A (KONICA MINOLTA INC) 11 October 2018 (2018-10-11) * paragraph [0007] - paragraph [00017]; claim 1; figures 1-11 * * paragraph [0025] - paragraph [0026] * * paragraph [0050] * * paragraph [0062] - paragraph [0063] * * paragraph [0080] * ----- | 1-22 | TECHNICAL FIELDS SEARCHED (IPC) B41J H02P |

The present search report has been drawn up for all claims

| Place of search | Date of completion of the search | Examiner |
|---|---|---|
| Munich | 3 April 2019 | Roussel, Maxime |

EPO FORM 1503 03.82 (P04C01)

## ANNEX TO THE EUROPEAN SEARCH REPORT
## ON EUROPEAN PATENT APPLICATION NO.

EP 18 21 0065

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2019

| Patent document cited in search report | | Publication date | Patent family member(s) | | Publication date |
|---|---|---|---|---|---|
| JP 2017184378 | A | 05-10-2017 | NONE | | |
| US 2009315503 | A1 | 24-12-2009 | JP 2009273334 A | | 19-11-2009 |
| | | | US 2009315503 A1 | | 24-12-2009 |
| US 2018095393 | A1 | 05-04-2018 | NONE | | |
| JP 2018161003 | A | 11-10-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017236310 A
- JP 2002159196 A
- JP 2006039095 A
- JP 2006017988 A
- JP 2007058082 A